# EUROPEAN PATENT APPLICATION

(11) **EP 4 679 627 A1**
(43) Date of publication of application: **14.01.2026**
(21) Application number: 24210530.2
(22) Date of filing: 04.11.2024
(51) Int. Cl.: H01Q 1/32, H01Q 15/00, H01Q 21/00, H01P 1/20, H01P 5/02

(54) **ANTENNA INCLUDING ARTIFICIAL MAGNETIC CONDUCTOR WAVEGUIDE**

(30) Priority: 12.07.2024 US 202418771412
(71) Applicant: Aptiv Technologies AG, 8200 Schaffhausen (CH)
(72) Inventor: BLAUERT, John K., Westfield, IN, 46074 (US)
(74) Representative: Manitz Finsterwald Patent- und Rechtsanwaltspartnerschaft mbB

(57) **Abstract**

An antenna assembly including: a circuit board including an integrated circuit configured to process a radio frequency (RF) signal, and a conductor extending from the integrated circuit; a conductive top plate opposite to the circuit board, the conductive top plate defining an antenna configured to receive and transmit RF signals; and a plurality of artificial magnetic conductors between the circuit board and the conductive top plate, the plurality of artificial magnetic conductors defining a waveguide extending from the conductor to the antenna. The plurality of artificial magnetic conductors each include a height, a width, and a length that is longer than the width. The plurality of artificial magnetic conductors include a metamaterial configured to impede the RF signals within a frequency band of operation including 77GHz.

## Description

### FIELD

The present disclosure relates to an antenna including an artificial magnetic conductor waveguide.

### BACKGROUND

This section provides background information related to the present disclosure, which is not necessarily prior art.

Radar uses electromagnetic signals to detect and track objects. The electromagnetic signals are transmitted and received using one or more antennas. Air-waveguide antennas are used in various applications, including automotive applications. Air-waveguide antennas define channels filled with air through which RF energy propagates between an integrated circuit and antenna slots. Air-waveguide antennas provide numerous efficiencies, and may be used as a heat sink for the integrated circuit, for example.

### SUMMARY

This section provides a general summary of the disclosure, and is not a comprehensive disclosure of its full scope or all of its features.

The present disclosure provides for, in various features, an antenna assembly including: a circuit board with an integrated circuit configured to process a radio frequency (RF) signal; a conductive top plate opposite to the circuit board, the conductive top plate defining an antenna configured to at least one of receive and transmit RF signals; and a plurality of artificial magnetic conductors between the circuit board and the conductive top plate, the plurality of artificial magnetic conductors defining a waveguide extending from the integrated circuit to the antenna. The plurality of artificial magnetic conductors each include a height, a width, and a length that is longer than the width. The plurality of artificial magnetic conductors are configured to impede the RF signals within a frequency band of operation including 77GHz.

In further features, a chip-to-waveguide transition is between the integrated circuit and the plurality of artificial magnetic conductors.

In further features, the plurality of artificial magnetic conductors include a metamaterial and are mounted to the conductive top plate.

In further features, gaps are defined between each one of the plurality of artificial magnetic conductors and the circuit board.

In further features, the plurality of artificial magnetic conductors are arranged in a first pair of rows on a first side of the waveguide, and a second pair of rows on a second side of the waveguide.

In further features, the plurality of artificial magnetic conductors define a curve of the waveguide.

In further features, the height is 1.5mm, the width is 1.0mm, and the length is 2.25mm.

In further features, each one of the plurality of artificial magnetic conductors is rectangular; and the frequency band of operation is a second band gap of 69GHz - 91 GHz.

In further features, the second band gap is greater than a first band gap of 19GHz - 65GHz.

In further features, each one of the plurality of artificial magnetic conductors includes a rectangular body, a first protrusion extending from the rectangular body, a second protrusion extending from the rectangular body, and an indentation defined between the first protrusion and the second protrusion.

In further features, the indentation is a quarter wavelength indentation.

In further features, the frequency band of operation is a second band gap of 44GHz - 87GHz; and the second band gap is greater than a first band gap of 29GHz - 34GHz.

In further features, the present disclosure includes an intermediate layer between the circuit board and the conductive top plate. The plurality of artificial magnetic conductors is a first plurality of artificial magnetic conductors on a first side of the intermediate layer. The antenna is a first antenna. The waveguide is a first waveguide defined by the first plurality of artificial magnetic conductors extending from the integrated circuit to the first antenna. A second plurality of artificial magnetic conductors is on a second side of the intermediate layer opposite to the first side. The second plurality of artificial magnetic conductors defines a second waveguide extending to a second antenna defined by the conductive top plate.

In further features, the waveguide includes a waveguide height and a waveguide width. The waveguide width is at least half a wavelength and the waveguide height is less than half the wavelength.

The present disclosure also provides for, in various features, an antenna assembly including: a circuit board including an integrated circuit configured to process a radio frequency (RF) signal, and a chip-to-waveguide transition extending from the integrated circuit; a conductive top plate opposite to the circuit board, the conductive top plate defining an antenna configured to at least one of receive and transmit RF signals; and a plurality of artificial magnetic conductors between the circuit board and the conductive top plate. Gaps are defined between each one of the plurality of artificial magnetic conductors and the circuit board. The plurality of artificial magnetic conductors define a waveguide extending from the chip-to-waveguide transition to the antenna. The plurality of artificial magnetic conductors are arranged in a first pair of rows on a first side of the waveguide, and a second pair of rows on a second side of the waveguide. Each one of the plurality of artificial magnetic conductors is rectangular and includes a height, a width, and a length that is longer than the width. The plurality of artificial magnetic conductors include a metallic metamaterial configured to impede the RF signals within a second frequency band gap including 77GHz. The second frequency band gap is greater than a first frequency band gap.

In further features: the height is 1.5mm, the width is 1.0mm, and the length is 2.25mm; the plurality of artificial magnetic conductors are spaced apart at a first distance of 3.25mm in a first direction parallel to the waveguide; and the plurality of artificial magnetic conductors of the first pair of rows and the plurality of artificial magnetic conductors of the second pair of rows are each spaced apart at a second distance of 2.0mm in a second direction perpendicular to the first direction.

In further features, the second frequency band gap is 69GHz - 91 GHz and the first frequency band gap is 19GHz - 65GHz.

In further features, the second frequency band gap is 44GHz - 87GHz and the first frequency band gap is 29GHz - 34GHz.

The present disclosure also provides for, in various features, an antenna assembly including: a circuit board including an integrated circuit configured to process a radio frequency (RF) signal, and a chip-to-waveguide transition extending from the integrated circuit; a conductive top plate opposite to the circuit board, the conductive top plate defining an antenna configured to at least one of receive and transmit RF signals; and a plurality of artificial magnetic conductors between the circuit board and the conductive top plate defining a waveguide extending from the chip-to-waveguide transition to the antenna. Gaps are defined between each one of the plurality of artificial magnetic conductors and the circuit board. Each one of the plurality of artificial magnetic conductors includes a rectangular body, a first protrusion extending from the rectangular body, a second protrusion extending from the rectangular body, and an indentation defined between the first protrusion and the second protrusion. The plurality of artificial magnetic conductors are each made of a metallic metamaterial. The plurality of artificial magnetic conductors are arranged in a first pair of rows on a first side of the waveguide, and a second pair of rows on a second side of the waveguide. Each one of the plurality of artificial magnetic conductors is rectangular and includes a height, a width, and a length that is longer than the width. The plurality of artificial magnetic conductors are configured to impede the RF signals within a second frequency band gap of 44GHz-87GHz, which is greater than a first frequency band gap of 29GHz-34GHz.

In further features, an intermediate layer is between the circuit board and the conductive top plate. The plurality of artificial magnetic conductors is a first plurality of artificial magnetic conductors on a first side of the intermediate layer, the antenna is a first antenna, and the waveguide is a first waveguide defined by the first plurality of artificial magnetic conductors extending from the integrated circuit to the first antenna. A second plurality of artificial magnetic conductors is on a second side of the intermediate layer opposite to the first side. The second plurality of artificial magnetic conductors defines a second waveguide extending to a second antenna defined by the conductive top plate.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of select embodiments and not all possible implementations, and are not intended to limit the scope of the present disclosure.
FIG. 1 is an exploded view of an antenna assembly in accordance with the present disclosure;
FIG. 2 is a side view of the antenna assembly of FIG. 1;
FIG. 3A is a perspective view of a conductive top plate and a plurality of artificial magnetic conductors of the antenna assembly of FIG. 1;
FIG. 3B is a plan view of a plurality of artificial magnetic conductors of the antenna assembly of FIG. 1;
FIG. 4 is a plan view of the antenna assembly of FIG. 1;
FIG. 5 is a cross-sectional view of the antenna assembly of FIG. 1;
FIG. 6 is a cross-sectional view of another antenna assembly in accordance with the present disclosure;
FIG. 7A is a perspective view of one of a plurality of artificial magnetic conductors of the antenna assembly of FIG. 1;
FIG. 7B is a plan view of the artificial magnetic conductor of FIG. 7A;
FIG. 7C is a side view of the artificial magnetic conductor of FIG. 7A;
FIG. 8 is a perspective view of another artificial magnetic conductor in accordance with the present disclosure;
FIG. 9 is a graph illustrating band gap frequencies of operation of a plurality of the artificial magnetic conductors illustrated in FIGS. 7A, 7B, and 7C; and
FIG. 10 is a graph illustrating band gap frequencies of operation of a plurality of the artificial magnetic conductors illustrated in FIG. 8.

Corresponding reference numerals indicate corresponding parts throughout the several views of the drawings.

### DETAILED DESCRIPTION

Example embodiments will now be described more fully with reference to the accompanying drawings.

Metallic waveguide antennas include a metallic top plate and a metallic bottom plate with a waveguide defined therebetween. Manufacturing all-metal waveguide antennas is complicated because it is difficult to ensure that both the top and bottom metal plates are touching across an interface between the plates. A gap may thus be defined between the metallic plates. The gap results in power leakage, decreased efficiency, and channel isolation. To address this issue, gap-waveguides are included, which utilize artificial magnetic conductors along the waveguide boundaries to enforce electromagnetic boundary conditions to effectively guide RF waves.

Artificial magnetic conductors are periodic metamaterials that resonate at certain frequencies to behave like an open circuit. This open circuit suppresses surface waves and any other propagation through the artificial magnetic conductor. As long as the artificial magnetic conductors don't touch the opposing metallic plate, the structure of the artificial magnetic conductors provides magnetic conductors and the opposing surfaces of the metallic plates provide electrical conductors for the RF waves.

The present disclosure provides for an antenna assembly with an air-waveguide defined by a plurality of artificial magnetic conductors. To facilitate manufacturing and enhance the robustness of the antenna assembly, the plurality of artificial magnetic conductors each include a height, a width, and a length that is longer than the width. The artificial magnetic conductors are sized, shaped, and otherwise configured to impede radio frequency (RF) signals within a frequency band of operation including 77GHz. For example, the plurality of artificial magnetic conductors are sized and shaped, and include a metamaterial configured to, impede the RF signals within a second frequency band gap of 44-87GHz. The second frequency band gap is greater than a first frequency band gap of, for example, 29-34GHz. The plurality of artificial magnetic conductors may alternatively be configured to impede the RF signals within a second frequency band gap of 69-91GHz and a first frequency band gap of 19-65GHz.

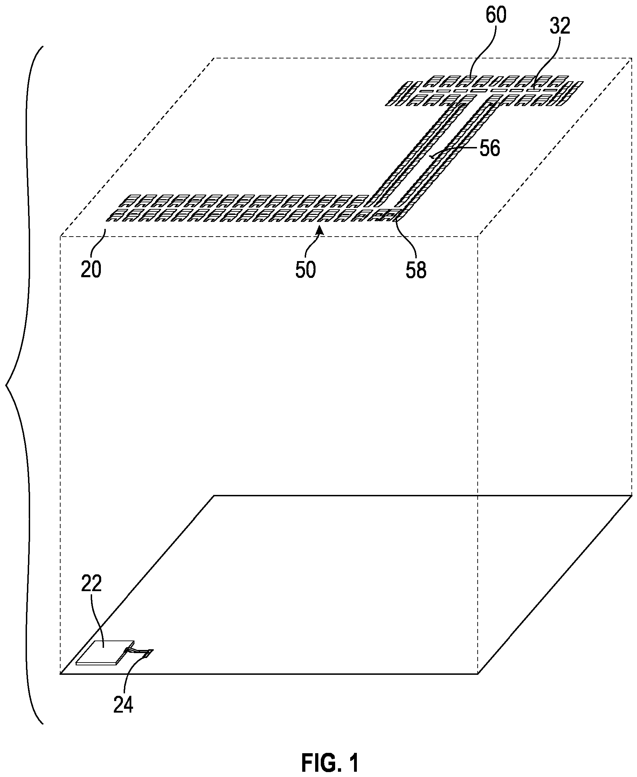

FIG. 1 illustrates an exemplary antenna assembly 10 in accordance with the present disclosure. The antenna assembly 10 is configured for use in any suitable application, such as an automotive application. For example, the antenna assembly 10 may be configured for use with any suitable advanced driver assistance system (ADAS). The antenna assembly 10 may be configured for use with, for example, a forward-facing radar system, a corner radar system, etc. The antenna assembly 10 may be configured for any other suitable automotive or non-automotive use as well.

The antenna assembly 10 generally includes a circuit board 20 and a conductive top plate 30, which defines one or more antenna slots 32. The circuit board 20 includes an integrated circuit (IC) 22 configured to process radio frequency (RF) signals. Extending from the IC 22 is a chip-to-waveguide transition 24, also known as a wave launcher. The transition 24 is configured to generate RF waves based on electrical signals generated by the integrated circuit 22. The transition 24 may also be configured to receive RF waves received by the antenna assembly 10.

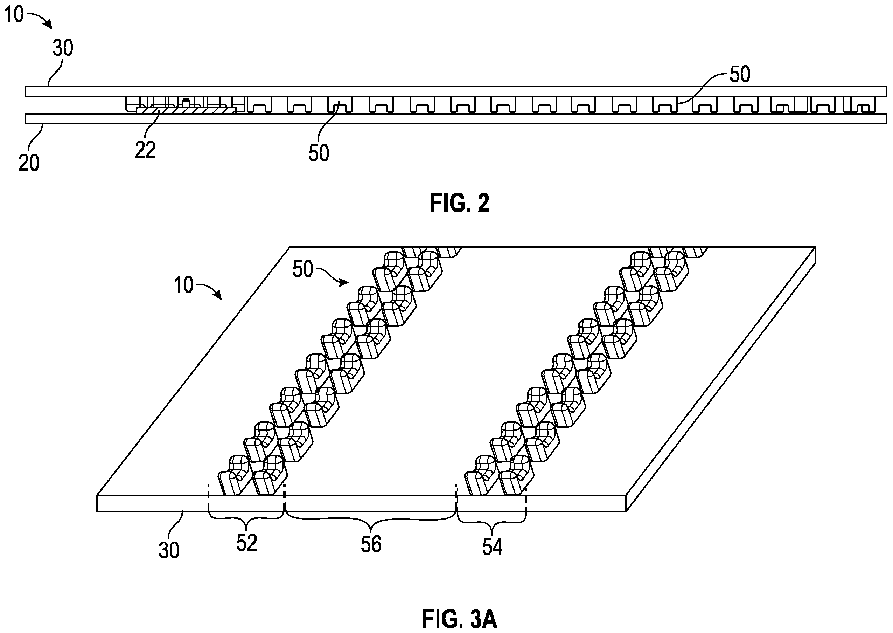

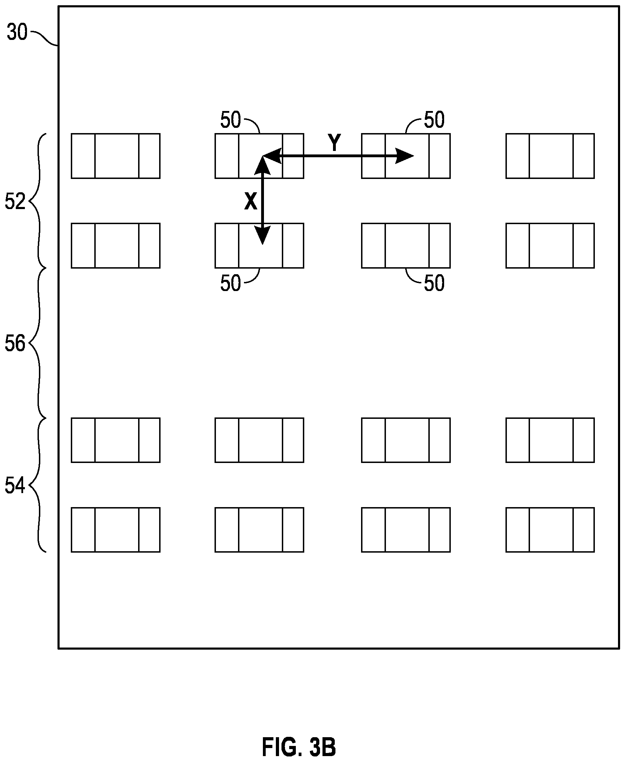

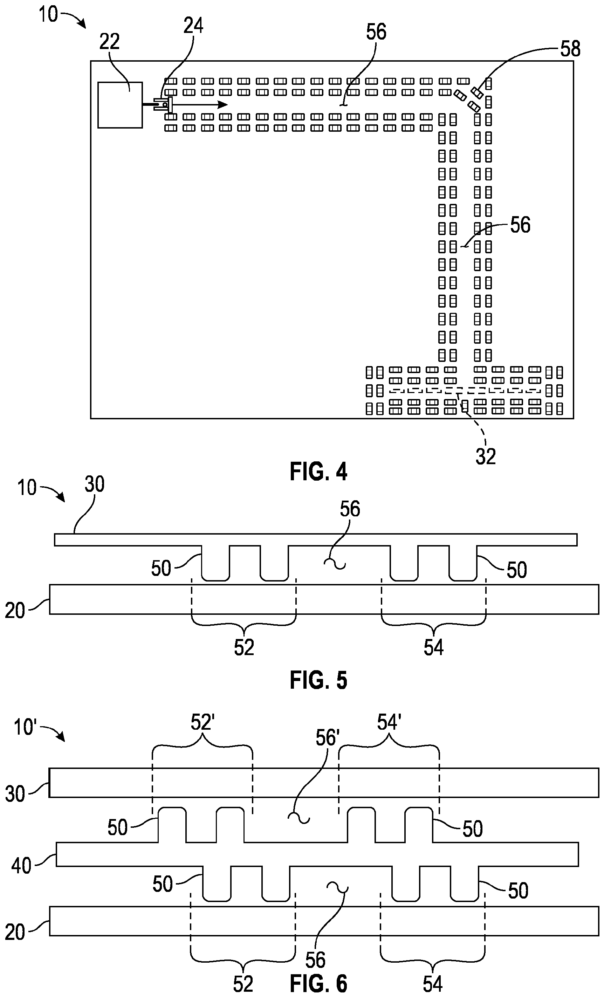

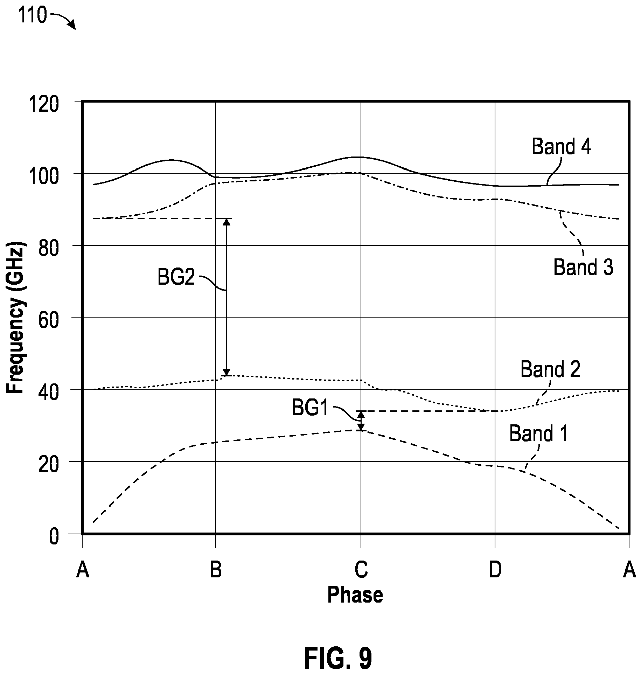

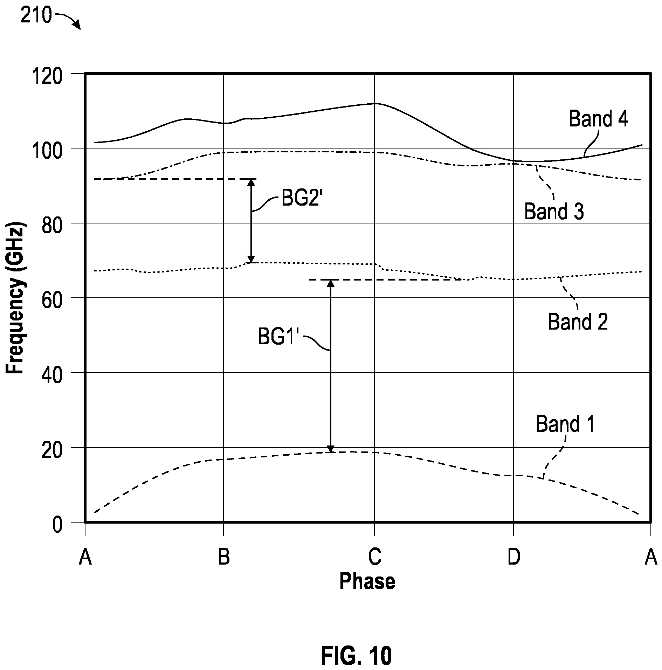

With continued reference to FIG. 1, and additional reference to FIGS 2-5, a plurality of artificial magnetic conductors 50 are arranged between the circuit board 20 and the conductive top plate 30. The artificial magnetic conductors 50 may be mounted to, or otherwise included with, the conductive top plate 30 or the circuit board 20. In the example of FIGS. 2 and 3, the plurality of artificial magnetic conductors 50 are mounted to, or otherwise included with, the conductive top plate 30. For example, the plurality of artificial magnetic conductors 50 may be secured to the conductive top plate 30 in any suitable manner, or may be formed integral with the conductive top plate 30. The plurality of artificial magnetic conductors 50 may be stamped into the conductive top plate 30, for example, so as to protrude from outward from an inner surface of the conductive top plate 30. With particular reference to FIG. 5, gaps are defined between the artificial magnetic conductors 50 and the circuit board 20. The band diagram simulations of FIGS. 9 and 10 described herein were performed with a 50µm gap between the artificial magnetic conductors 50 and the circuit board 20.

The plurality of artificial magnetic conductors 50 are arranged in a first pair of rows 52 and a second pair of rows 54. The first pair of rows 52 and the second pair of rows 54 are spaced apart to define an air-waveguide 56 therebetween. The air-waveguide 56 is further defined by a metallic surface of the circuit board 20 and a metallic surface of the conductive top plate 30. On opposite sides of the air-waveguide 56 are at least the first pair of rows 52 and the second pair of rows 54 of the conductors 50. Additional conductors 50 may be included as part of the first pair of rows 52 and the second pair of rows 54 as well. The air-waveguide 56 extends from the transition 24 to an end 80 of the air-waveguide 56, which is aligned with the antenna slots 32. The air-waveguide 56 may include one or more curves 58 defined by the conductors 50.

With reference to FIG. 6, the antenna assembly 10 may include an intermediate layer 40 arranged between the circuit board 20 and the conductive top plate 30. The intermediate layer 40 may be made of any suitable metallic material. The plurality of artificial magnetic conductors 50 are at a bottom surface of the intermediate layer 40. The gap is defined between the conductors 50 and the circuit board 20. In the example of FIG. 6, the conductors 50 at the bottom of the intermediate layer 40 are a first plurality of artificial magnetic conductors defining the air-waveguide 56, which is a first waveguide.

On top of the intermediate layer 40 are additional artificial magnetic conductors 50, which define a second waveguide 56'. More specifically, the second waveguide 56' is defined by a first pair of rows 52' and a second pair of rows 54' of the plurality of artificial magnetic conductors 50 at the top of the intermediate layer 40. The second waveguide 56' extends from the IC 22 to additional antenna slots defined by the conductive top plate 30 (similar to the antenna slots 32). A second transition (similar to the transition 24) would extend vertically from the IC 22 to the second waveguide 56'.

The structure of the artificial magnetic conductors 50 will now be described further. Each one of the plurality of artificial magnetic conductors 50 is made of any suitable metallic metamaterial, which is configured to impede RF signals within a frequency band of operation including 77GHz. The artificial magnetic conductors 50 include periodic metamaterial structures of any suitable material that effectively behaves like a new material not found in nature. The geometry of these structures thereby determines the effective behavior. The metamaterials may be all dielectric, all conductor, or any combination between. With the air waveguides 56, 56', the only dielectric is air and the metamaterials are constructed out of periodic arrays of metal deformations such as pins, rods, rings, or any other electromagnetically interesting shape.

The artificial magnetic conductors 50 generally include a height H, a width W, and a length L, which is longer than the width. The artificial magnetic conductors 50 generally have a rectangular shape. The artificial magnetic conductors 50 are oriented such that the length L of each conductor 50 extends parallel to, or generally parallel to, a length direction of the air-waveguide 56. Thus, the width W of each conductor 50 extends generally perpendicular to the length direction of the air-waveguide 56.

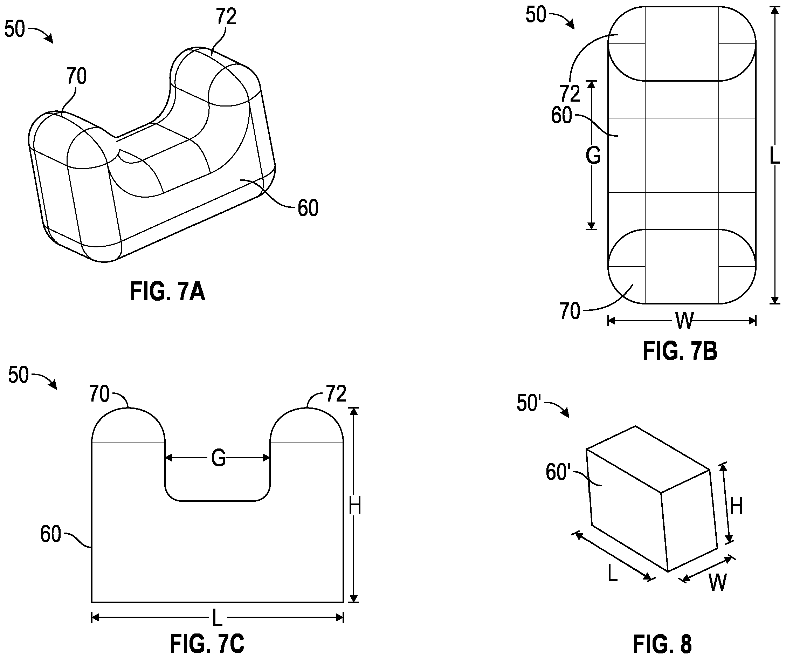

FIGS. 7A, 7B, and 7C illustrate an exemplary one of the artificial magnetic conductors 50. The conductor 50 includes a body 60. A first protrusion 70 and a second protrusion 72 extend from the body 60. The first protrusion 70 and the second protrusion 72 are spaced apart to define a gap G therebetween. The first protrusion 70 and the second protrusion 72 are optional. For example, FIG. 8 illustrates an artificial magnetic conductor 50' including a body 60' without the first protrusion 70 and without the second protrusion 72. The body 60' includes a height H, a width W, and a length L.

The height H, the width W, and the length L of the body 60 and the body 60' may be any suitable dimensions. For example, the height H may be 1.5mm or about 1.5mm. The width W may be 1.0mm, or about 1.0mm. The length L may be 2.25mm, or about 2.25mm. The width W is roughly a quarter wavelength, and the length L is roughly a half wavelength with the protrusions 70, 72 added to further extend the bandwidth. The first protrusion 70 and the second protrusion 72 may each extend 0.5mm from the body 60, or about 0.5mm from the body 60. The gap G between the first protrusion 70 and the second protrusion 72 may be 1.0mm, or about 1.0mm. The gap G is a quarter-wavelength in size.

With reference to FIG. 3B, for example, the artificial magnetic conductors 50 (as well as the artificial magnetic conductors 50') are spaced apart in the Y-direction along the air-waveguide 56 at a distance of 3.25mm (or about 3.25mm) as measured between centers of the conductors 50 that are directly adjacent to each other in the Y-direction. The artificial magnetic conductors 50 (as well as the artificial magnetic conductors 50') are spaced apart in the X-direction, which is perpendicular to the Y-direction, at a distance of 2.0mm (or about 2.0mm) as measured between centers of the conductors 50 that are directly adjacent to each other in the X-direction. The artificial magnetic conductors 50, 50' may be spaced apart at any other suitable distances in the Y-direction and the X-direction. The air-waveguide 56 defined by the artificial magnetic conductors 50, 50' is a waveguide channel with a width between the first pair of rows 52 and the second pair of rows 54 of at least half a wavelength, and a height perpendicular to the width that is less than half a wavelength.

FIG. 9 is a graph 110 illustrating band gap frequencies of operation of artificial magnetic conductors in accordance with the present disclosure, such as the artificial magnetic conductors 50 including the body 60, the first protrusion 70, and the second protrusion 72. As shown in the graph 110 of FIG. 9, such artificial magnetic conductors 50 are configured to impede RF signals within a second frequency band gap BG2 of 44GHz - 87GHz, which is greater than a first frequency band gap BG1 of 29GHz - 34GHz.

FIG. 10 is a graph 210 illustrating band gap frequencies of operation of the artificial magnetic conductors 50' including the body 60' without the first protrusion 70 and without the second protrusion 72. As shown in the graph 210 of FIG. 10, such artificial magnetic conductors 50 are configured to impede RF signals within a second frequency band gap BG2' of 69GHz - 91GHz, which is greater than a first frequency band gap BG1' of 19GHz - 65GHz.

Including the first protrusion 70 and the second protrusion 72 with the body 60 results in a larger second frequency band gap BG2 (graph 110) as compared to the second frequency band gap BG2' for the artificial magnetic conductor 50', which includes the body 60' without protrusions. Increasing the size of the second band gap BG2 advantageously accommodates manufacturing variables, which may result in the artificial magnetic conductors 50 being configured to impede the RF signals at slightly greater than, or less than, 77GHz.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

## Claims

1. An antenna assembly comprising:
a circuit board including an integrated circuit configured to process a radio frequency (RF) signal;
a conductive top plate opposite to the circuit board, the conductive top plate defining an antenna configured to at least one of receive and transmit RF signals; and
a plurality of artificial magnetic conductors between the circuit board and the conductive top plate, the plurality of artificial magnetic conductors defining a waveguide extending from the integrated circuit to the antenna,
wherein:
the plurality of artificial magnetic conductors each include a height, a width, and a length that is longer than the width, and
the plurality of artificial magnetic conductors are configured to impede the RF signals within a frequency band of operation including 77GHz.

2. The antenna assembly of claim 1, further comprising a chip-to-waveguide transition extending from the integrated circuit and in particular between the integrated circuit and the plurality of artificial magnetic conductors, the plurality of artificial magnetic conductors in particular defining a waveguide extending from the chip-to-waveguide transition to the antenna.

3. The antenna assembly of claim 1 or 2, wherein the plurality of artificial magnetic conductors include a metamaterial and are mounted to the conductive top plate, wherein the plurality of artificial magnetic conductors in particular include a metallic metamaterial configured to impede the RF signals within a second frequency band gap including 77GHz and the second frequency band gap is greater than a first frequency band gap.

4. The antenna assembly of any one of the preceding claims, wherein gaps are defined between each one of the plurality of artificial magnetic conductors and the circuit board.

5. The antenna assembly of any one of the preceding claims, wherein the plurality of artificial magnetic conductors are arranged in a first pair of rows on a first side of the waveguide, and a second pair of rows on a second side of the waveguide.

6. The antenna assembly of claim 5, wherein:
the height is 1.5mm, the width is 1.0mm, and the length is 2.25mm;
the plurality of artificial magnetic conductors are spaced apart at a first distance of 3.25mm in a first direction parallel to the waveguide; and
the plurality of artificial magnetic conductors of the first pair of rows and the plurality of artificial magnetic conductors of the second pair of rows are each spaced apart at a second distance of 2.0mm in a second direction perpendicular to the first direction.

7. The antenna assembly of any one of the preceding claims, wherein the plurality of artificial magnetic conductors define a curve of the waveguide.

8. The antenna assembly of any one of the preceding claims, wherein the height is 1.5mm, the width is 1.0mm, and the length is 2.25mm.

9. The antenna assembly of any one of the preceding claims, wherein:
each one of the plurality of artificial magnetic conductors is rectangular and in particular includes a height, a width, and a length that is longer than the width; and
the frequency band of operation is a second band gap of 69GHz - 91GHz.

10. The antenna assembly of claim 9, wherein the second band gap is greater than a first band gap of 19GHz - 65GHz.

11. The antenna assembly of any one of the preceding claims, wherein:
each one of the plurality of artificial magnetic conductors includes a rectangular body, a first protrusion extending from the rectangular body, a second protrusion extending from the rectangular body, and an indentation defined between the first protrusion and the second protrusion,
wherein the indentation is in particular a quarter wavelength indentation, and/or
wherein the frequency band of operation is a second band gap of 44GHz - 87GHz; and
the second band gap is greater than a first band gap of 29GHz - 34GHz.

12. The antenna assembly of any one of the preceding claims, further comprising an intermediate layer between the circuit board and the conductive top plate,
wherein the plurality of artificial magnetic conductors is a first plurality of artificial magnetic conductors on a first side of the intermediate layer, the antenna is a first antenna, and the waveguide is a first waveguide defined by the first plurality of artificial magnetic conductors extending from the integrated circuit to the first antenna, and
wherein a second plurality of artificial magnetic conductors is on a second side of the intermediate layer opposite to the first side, the second plurality of artificial magnetic conductors defining a second waveguide extending to a second antenna defined by the conductive top plate.

13. The antenna assembly of any one of the preceding claims, wherein the waveguide includes a waveguide height and a waveguide width, the waveguide width is at least half a wavelength and the waveguide height is less than half the wavelength.

14. An antenna assembly comprising:
a circuit board including an integrated circuit configured to process a radio frequency (RF) signal, and a chip-to-waveguide transition extending from the integrated circuit;
a conductive top plate opposite to the circuit board, the conductive top plate defining an antenna configured to at least one of receive and transmit RF signals; and
a plurality of artificial magnetic conductors between the circuit board and the conductive top plate defining a waveguide extending from the chip-to-waveguide transition to the antenna, gaps are defined between each one of the plurality of artificial magnetic conductors and the circuit board, each one of the plurality of artificial magnetic conductors including a rectangular body, a first protrusion extending from the rectangular body, a second protrusion extending from the rectangular body, and an indentation defined between the first protrusion and the second protrusion,
wherein:
the plurality of artificial magnetic conductors are each made of a metallic metamaterial,
the plurality of artificial magnetic conductors are arranged in a first pair of rows on a first side of the waveguide, and a second pair of rows on a second side of the waveguide,
each one of the plurality of artificial magnetic conductors is rectangular and includes a height, a width, and a length that is longer than the width, and
the plurality of artificial magnetic conductors configured to impede the RF signals within a second frequency band gap of 44GHz-87GHz, which is greater than a first frequency band gap of 29GHz-34GHz.

15. The antenna assembly of claim 14, further comprising an intermediate layer between the circuit board and the conductive top plate,
wherein the plurality of artificial magnetic conductors is a first plurality of artificial magnetic conductors on a first side of the intermediate layer, the antenna is a first antenna, and the waveguide is a first waveguide defined by the first plurality of artificial magnetic conductors extending from the integrated circuit to the first antenna, and
wherein a second plurality of artificial magnetic conductors is on a second side of the intermediate layer opposite to the first side, the second plurality of artificial magnetic conductors defining a second waveguide extending to a second antenna defined by the conductive top plate.
